# EUROPEAN PATENT APPLICATION

(11) **EP 4 266 517 A1**
(43) Date of publication of application: **25.10.2023**
(21) Application number: 22305601.1
(22) Date of filing: 22.04.2022
(51) Int. Cl.: H02G 15/34, H02H 9/02, H02J 3/36, H01R 4/68

(54) **3-PHASE SUPERCONDUCTING CABLE SYSTEM WITH REDUNDANCY**

(71) Applicant: Nexans, 92400 Courbevoie (FR)
(72) Inventor: MARZAHN, Erik, 30853 Langenhagen (DE); WEST, Beate, 30169 Hannover (DE); ALLAIS, Arnaud, 69003 Lyon (FR); LALLOUET, Nicolas, 62360 BAINCTHUN (FR)
(74) Representative: Ipsilon

(57) **Abstract**

A 3-phase superconducting cable system (100) comprises four 1-phase superconducting cables (A, B, C, D). Interrupting switches (S1, S2, S3, S4, S5, S6) are arranged at respective first and second ends of a first (A), second (B) and third (C) of the 1-phase superconducting cables, and first connecting switches (S7, S9, S11) and second connecting switches (S8, S10, S12) are connected at a first and a second end, respectively, of the fourth (D) 1-phase superconducting cable. The interrupting switches (S1, S2, S3, S4, S5, S6) and the first (S7, S9, S11) and second (S8, S10, S12) connecting switches are operable to selectively disconnect one of the first (A), second (B) and third (C) one of the 1-phase superconducting cables from their respective current phase (L1, L2, L3) and to connect the fourth (D) 1-phase superconducting cable to the previously disconnected current phase (L1, L2, L3), effectively replacing the disconnected 1-phase superconducting cable.

## Description

### FIELD

The present invention relates to superconducting cable systems, in particular to 3-phase superconducting cable systems in which conductors of each phase of the cable system run in separate cryostats.

### BACKGROUND

The electrical conductors of both low-temperature and high temperature superconductive cable systems must be cooled during operation in order to establish and maintain their desired superconducting properties. Low-temperature superconductors, typically metallic superconductors, may need to be cooled down to very low temperatures as low as 4 Kelvin or below to become superconducting, which can be achieved, e.g., by using liquid Helium as coolant. High temperature superconductors, typically ceramic superconductors, may need to be cooled down less deep, typically down to temperatures of 77 Kelvin and above, which can be achieved, e.g., using liquid Nitrogen (LN2) as coolant. The present disclosure is applicable for both and high and low temperature superconductors.

Similar to conventional cables, any phase conductor of 3-phase superconducting cables can be damaged at any time. This damage can be electrical, or hydraulic if there is a leak in the cryogenic envelope in which the coolant circulates. Repairs are time consuming, or in some cases not possible, so that components must be replaced. During this time, the entire 3-phase superconducting cable system cannot be operated.

### SUMMARY OF THE INVENTION

It is, therefore, an object of the present invention to provide a superconducting cable system that can continue operation while one conductor or its cryogenic envelope is damaged or broken.

This object is achieved by the superconducting cable system of claim 1, and the method of operating the superconducting cable system of claim 8. Advantageous embodiments and developments are provided in the respective dependent claims.

A 3-phase superconducting cable system in accordance with a first aspect of the invention comprises four 1-phase superconducting cables, of which a first, a second and a third are electrically connected with a corresponding first, second and third electrical phase. Interrupting switches are arranged at respective first and second ends of a first, second and third of the 1-phase superconducting cables. First connecting switches and second connecting switches are connected at a first and a second end, respectively, of the fourth 1-phase superconducting cable in such a way, that a switchable connection between the first and second ends of the fourth superconducting cable and corresponding ends of each of the first, second and third superconducting cables exists. The interrupting switches and the first and second connecting switches are operable to selectively disconnect one of the first, second or third of the 1-phase superconducting cables from their respective current phase and to connect the fourth 1-phase superconducting cable to the previously disconnected current phase, effectively replacing the disconnected 1-phase superconducting cable.

In one or more embodiments each of the four 1-phase superconducting cables runs in a separate cryogenic envelope, and each of the separate cryogenic envelopes has shut-off valves at the respective first and second ends.

In one or more embodiments at least a first cooling system is provided, which feeds coolant into a first end of at least a first one of the four cryogenic envelopes, and receives coolant from a first end of at least a second one of the four cryogenic envelopes.

In one or more embodiments the second ends of the cryogenic envelopes are connected to a coolant router which is adapted to receive coolant from at least one of the four cryogenic envelopes and to feed coolant into at least another one of the four cryogenic envelopes.

In one or more embodiments a second cooling system is provided, which is adapted to receive coolant from the second ends of cryogenic envelopes coolant-fed by the first cooling system at their respective first ends, and which is adapted to feed coolant into the second ends of cryogenic envelopes, from which the first cooling unit receives coolant at their respective first ends.

In one or more embodiments a spare coolant line is provided between first cooling system and the coolant router or the second cooling system, respectively. The spare coolant line preferably has a the same hydraulic cross section or hydraulic properties as the cryogenic envelope of a superconducting cable.

In one or more embodiments each end of the four 1-phase superconducting cables is electrically shielded, and the shields are switchably connected to ground, at each respective end.

A method of operating a 3-phase superconducting cable system in accordance with the first aspect of the invention comprises detecting a damage to one of the first, second or third superconducting cable. If such damage is detected, the interrupting switches at the first and second end of the damaged superconducting cable are operated, for disconnecting it from the associated electrical phase. At the same time, or in a close temporal context, the respective first and second connecting switches associated with the damaged superconducting cable are operated, for connecting the fourth superconducting cable to the disconnected electrical phase. The close temporal context may comprise connecting the fourth superconducting cable to the disconnected electrical phase prior to disconnecting the damaged superconducting cable.

Disconnecting the damaged superconducting cable and connecting the fourth superconducting cable may comprise disconnecting and connecting the corresponding electrical shields.

During normal operation, i.e., none of the superconducting cables being damaged, the coolant will flow through all of the cryogenic envelopes, preferably symmetrically distributed.

In one or more embodiments the method further comprises closing the shut-off valves at both ends of the cryogenic envelope of the damaged superconducting cable. The damaged superconductor will then warm up and can be repaired or replaced.

In one or more embodiments the method further comprises if properties of a coolant flowing out of the first cooling system and/or into the first cooling system meet or exceed predetermined limit values. If the limit values are not met the method further comprises connecting the first cooling system and the coolant router, or the first cooling system and the second cooling system via a spare coolant line. The limit values may relate to one or more of a minimum flow, a maximum coolant return temperature, or the like. This embodiment permits compensating for an asymmetric coolant flow caused by closing the shut-off valves at both ends of the cryogenic envelope of the damaged superconducting cable, which otherwise would be symmetrically distributed over the cryogenic envelopes of the four superconducting cables in case the required low temperatures cannot be maintained through the asymmetric coolant flow.

After repair or replacement of the superconducting cable it will serve as a fourth, spare superconductor for any future damage to any of the other superconducting cables.

The superconducting cable system presented hereinbefore permits uninterrupted operation when one of the cables is damaged.

### BRIEF DESCRIPTION OF THE DRAWING

In the following section exemplary embodiments of the invention will be described with reference to the drawing, in which
- Fig. 1: shows a schematic diagram of the electrical connections of an exemplary superconducting cable system,
- Fig. 2: shows a schematic diagram of a cooling arrangement of the exemplary superconducting cable system, and
- Fig. 3: shows a flow diagram of an exemplary method of operating the exemplary superconducting cable system.

In the figures similar or identical elements are referenced using the same reference designators.

### DETAILED DESCRIPTION OF EMBODIMENTS

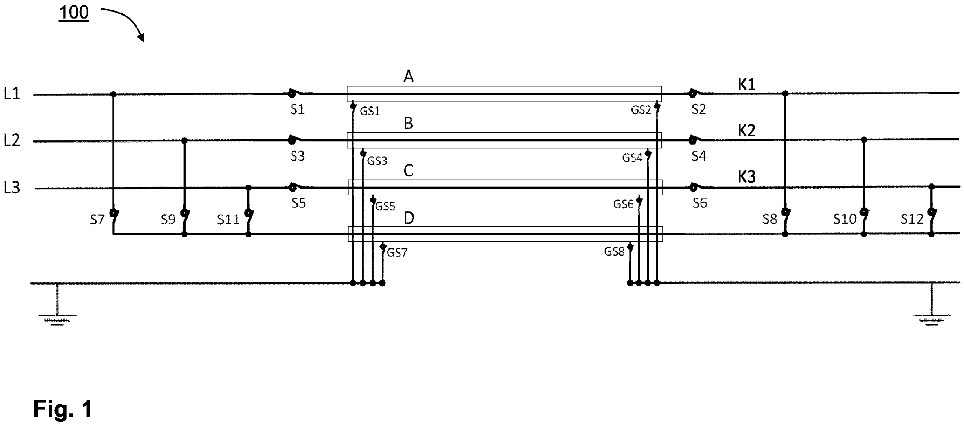

Figure 1 shows a schematic diagram of the electrical connections of an exemplary superconducting cable system 100. Phases L1 to L3 are connected to first ends of first, second and third superconducting cables A, B, and C via respective switches S1, S3, and S5. Switches S2, S4 and S6 at the second ends of the first, second and third superconducting cables A, B, and C permit connecting the phases L1 to L3 to conventional cables K1, K2 and K3, downstream of the superconducting cables A, B, and C. One of switches S7, S9, and S11 connects each of the phases L1 to L3 to a first end of a fourth superconducting cable D. Corresponding switches S8, S10, and S12 connect the second end of the fourth superconducting cable D to respective conventional cables K1, K2 and K3, downstream of switches S2, S4 and S6. Switches GS1, GS3, GS5, and GS7 connect respective electrical shields at the first end of the first through fourth superconducting cables A, B, C, and D to ground, and switches GS2, GS4, GS6, and GS8 connect respective electrical shields at the second end of the first through fourth superconducting cables A, B, C, and D to ground.

In normal operation only three phases and their associated shields are connected via the corresponding switches. If the superconducting cable actively connected to one of the three phases is damaged, the spare fourth superconducting cable can be connected via the associated switches. The damaged superconducting cable and the corresponding shield is disconnected by the associated switches.

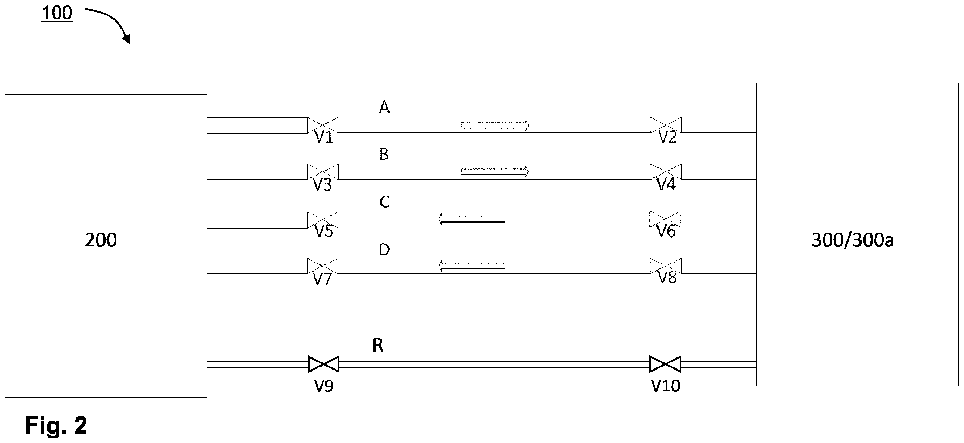

Figure 2 shows a schematic diagram of a cooling arrangement of the exemplary superconducting cable system 100. Shut-off valves V1, V3, V5, and V7 are provided at first ends of the cryogenic envelopes of the first through fourth superconducting cables A, B, C and D. The shut-off valves V1, V3, V5, and V7 connect the cryogenic envelopes to a first cooling system 200, which provides a coolant flow through two of the cryogenic envelopes, in the figure those of the superconducting cables A and B, and receives a coolant flow through two other of the cryogenic envelopes, in the figure those of the superconducting cables C and D. The coolant flow direction is indicated by the arrows. Shut-off valves V2, V4, V6, and V8 provided at second ends of the cryogenic envelopes of the first through fourth superconducting cables A, B, C and D are connected to a second cooling system 300 or to a coolant router 300a. The second cooling system 300 or the coolant router 300a receive a coolant flow from the first cooling system 200 through two of the cryogenic envelopes and return a coolant flow to the first cooling system 200 through two other of the cryogenic envelopes.

Under normal operating conditions, i.e., none of the superconducting cables or its cryogenic envelope is damaged, the coolant flow is symmetric, as the cryogenic envelopes have identical identical hydraulic cross sections or hydraulic properties and two cryogenic envelopes carry coolant from the first cooling system 200 to the second cooling system 300 or the coolant router 300a, and two other cryogenic envelopes carry coolant from the second cooling system 300 or the coolant router 300a to the first cooling system 200. In case one of the superconducting cables or its cryogenic envelope is damaged, the required low temperature within the cryogenic envelopes may be maintained using only three cryogenic envelopes in an asymmetric way.

However, if such asymmetric operation is insufficient for maintaining the required low temperature within the cryogenic envelopes, the asymmetry may be compensated for by the spare coolant line R. It is to be noted that the spare coolant line R can operate in either direction.

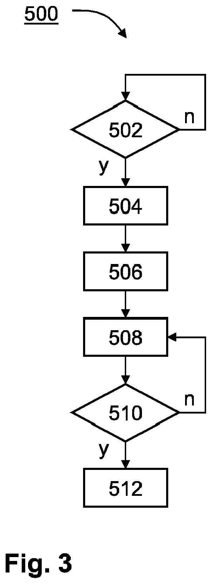

Figure 3 shows a flow diagram of an exemplary method of operating the exemplary superconducting cable system 100. In step 502 a periodic or continuous damage detection is carried out and looped back in the "no"-branch of step 502. In case a damage in a superconducting cable or its cryogenic envelope is detected, "yes"-branch of step 502, the corresponding interrupting switches S1, S2, S3, S4, S5, S6 at both ends of the damaged superconducting cable or its cryogenic envelope are operated, in step 504, for disconnecting it from the associated electrical phase (L1, L2, L3). In step 506 the corresponding valves of the damaged superconducting cable or its cryogenic envelope are closed, allowing the superconducting cable to warm up and be accessible for repair or replacement. In step 508 the respective first and second connecting switches associated with the damaged superconducting cable are closed, for connecting the fourth superconducting cable to the disconnected electrical phase. In step 510 the method determines, continuously or periodically, if properties of a coolant flow out of the first cooling system 200 and/or into the first cooling system 200 meet or exceed predetermined limit values. In the positive case, "yes"-branch of step 510, the first cooling system 200 and the coolant router 300a, or the first cooling system 200 and the second cooling system 300, are connected, in step 512, via spare coolant line R.

### LIST OF REFERENCE NUMERALS (PART OF THE DESCRIPTION)

- 100: superconducting cable system
- A: first 1-phase superconducting cable
- B: second 1-phase superconducting cable
- C: third 1-phase superconducting cable
- D: fourth 1-phase superconducting cable
- GS1-GS8: ground connection switches
- K1-K3: conventional cables
- L1: first electrical phase
- L2: second electrical phase
- L3: third electrical phase
- R: coolant spare line
- S1-S6: phase interrupting switches
- S7-S12: phase connecting switches
- V1-V10: shut-off valve
- 100: superconducting cable system
- 200: first cooling system
- 300: second cooling system
- 300a: coolant router
- 500: method
- 502: detect damage
- 504: disconnect damaged cable
- 506: close valves of damaged cable
- 508: connect spare cable
- 510: coolant flow sufficient?
- 512: connect spare coolant line

## Claims

1. A 3-phase superconducting cable system (100) comprising four 1-phase superconducting cables (A, B, C, D), **characterized in that** interrupting switches (S1, S2, S3, S4, S5, S6) are arranged at respective first and second ends of a first (A), second (B) and third (C) of the 1-phase superconducting cables, and **in that** first connecting switches (S7, S9, S11) and second connecting switches (S8, S10, S12) are connected at a first and a second end, respectively, of the fourth (D) 1-phase superconducting cable, the interrupting switches (S1, S2, S3, S4, S5, S6) and the first (S7, S9, S11) and second (S8, S10, S12) connecting switches being operable to selectively disconnect one of the first (A), second (B) or third (C) of the 1-phase superconducting cables from their respective electrical phase (L1, L2, L3) and to connect the fourth (D) 1-phase superconducting cable to the previously disconnected electrical phase (L1, L2, L3), effectively replacing the disconnected 1-phase superconducting cable.

2. The 3-phase superconducting cable system (100) of claim 1, wherein each of the four 1-phase superconducting cables (A, B, C, D) runs in a separate cryogenic envelope, and wherein each of the separate cryogenic envelopes has shut-off valves (V1-V8) at the respective first and second ends.

3. The 3-phase superconducting cable system (100) of claim 2, wherein at least a first cooling (200) system is provided, which feeds coolant into a first end of at least a first one of the four cryogenic envelopes and receives coolant from a first end of at least a second one of the four cryogenic envelopes.

4. The 3-phase superconducting cable system (100) of claim 3, wherein the second ends of the cryogenic envelopes are connected to a coolant router (300a) which is adapted to receive coolant from at least one of the four cryogenic envelopes and to feed coolant into at least another one of the four cryogenic envelopes.

5. The 3-phase superconducting cable system (100) of claim 3, wherein a second cooling system (300) is provided, which is adapted to receive coolant from the second ends of cryogenic envelopes coolant-fed by the first cooling system at their respective first ends, and which is adapted to feed coolant into the second ends of cryogenic envelopes, from which the first cooling unit receives coolant at their respective first ends.

6. The 3-phase superconducting cable system (100) of claim 4 or 5, wherein a spare coolant line (R) is provided between first cooling system (200) and the coolant router (300a) or the second cooling system (300), respectively.

7. The 3-phase superconducting cable system (100) of any one of the preceding claims, wherein each end of the four 1-phase superconducting cables (A, B, C, D) is electrically shielded, and the shields are switchably connected to ground, at each respective end.

8. A method (500) of operating a 3-phase superconducting cable system (100) in accordance with one or more of claims 1 to 7, comprising:
- detecting (502) a damage to one of the first, second or third superconducting cable (A, B, C) and, if such damage is detected,
- operating (504) the interrupting switches (S1, S2, S3, S4, S5, S6) at the first and second end of the damaged superconducting cable (A, B, C), for disconnecting it from the associated electrical phase (L1, L2, L3), and
- operating (508) the respective first and second connecting switches associated with the damaged superconducting cable (A, B, C), for connecting the fourth superconducting cable (D) to the disconnected electrical phase.

9. The method of claim 8, further comprising closing (506) the shut-off valves (V1-V6) at both ends of the cryogenic envelope of the damaged superconducting cable (A, B, C).

10. The method of claim 8 or 9, further comprising:
- determining (510), if properties of a coolant flow out of the first cooling system (200) and/or into the first cooling system (200) meet or exceed predetermined limit values, and
if the limit values are not met:
- connecting (512) the first cooling system (200) and the coolant router (300a), or the first cooling system (200) and the second cooling system (300) via a spare coolant line (R).
